# EUROPÄISCHE PATENTSCHRIFT

(11) **EP 3 277 550 B1**
(45) Veröffentlichungstag und Bekanntmachung des Hinweises auf die Patenterteilung: **12.12.2018**
(21) Anmeldenummer: 16710713.5
(22) Anmeldetag: 15.03.2016
(51) Int. Cl.: B60T 11/16, B60T 17/06

(54) **BREMSGERÄT MIT EINEM ARBEITSFLÜSSIGKEITSBEHÄLTER**
BRAKE SYSTEM WITH FLUID TANK
SYSTÈME DE FREINAGE AVEC RÉSERVOIR POUR FLUIDE

(30) Priorität: 01.04.2015 DE 102015205938
(43) Veröffentlichungstag der Anmeldung: 07.02.2018
(73) Patentinhaber: Continental Teves AG & Co. OHG, 60488 Frankfurt am Main (DE)
(72) Erfinder: GERBER, Sascha, 65307 Bad Schwalbach (DE); KREBS, Stephan, 65760 Eschborn (DE); KRÄMER, Horst, 65462 Ginsheim-Gustavsburg (DE); KÖNIG, Harald, 61239 Ober-Mörlen (DE); SCHIEL, Christoph, 61231 Bad Nauheim (DE)
(86) Internationale Anmeldenummer: PCT/EP2016/055552
(87) Internationale Veröffentlichungsnummer: WO 2016/156029

(56) Entgegenhaltungen:
- DE-A1- 10 108 610
- DE-A1- 19 615 157
- JP-A- 2007 057 091
- US-B1- 6 203 022

## Beschreibung

Die Erfindung betrifft ein Bremsgerät mit den Merkmalen nach dem Oberbegriff des Anspruchs 1, welches insbesondre für eine hydraulische Kraftfahrzeugbremsanlage verwendet wird.

Derartige Bremsgeräte sind sehr verbreitet und weisen einen Behälter für Arbeitsflüssigkeit auf, der mit einem Anschlussstutzen in eine Aufnahmebohrung in einem Hauptbremszylinder, Hauptbremszylinder, insbesondere einem Tandem-Hauptbremszylinder oder einer gesonderten Anschlussleitung eingesetzt und mit einem elastischen Dichtelement abgedichtet oder gar fixiert wird.

Die Erstbefüllung von Bremsanlagen mit Arbeitslosigkeit erfolgt meist automatisiert unter hohen Befülldrücken von (oft > 6 bar) Durch diesen Druck kann es zu Leckagen kommen, weil das Dichtelement sich verformt oder aus seinem vorgesehenen Sitz hinausgedrängt wird.

Um dies zu verhindern ist es beispielsweise bekannt, das Dichtelement mit radial umlaufenden Kragen zu versehen, die in eine umlaufende Nut in der Seitenwand der Aufnahmebohrung eingreifen (oder vice versa) und so einen Hinterschnitt bilden, welcher gegen die axiale Verschiebung des Dichtelements wirkt.

Herstellung derartiger Lösungen ist jedoch aufwendig und teuer. Auch ist die Montage fehleranfällig weil der Hinterschnitt einer einfachen Handhabung bei der Montage entgegensteht und eine ordnungsgemäße Positionierung des Kragens in der Nut sichergestellt und kontrolliert werden muss.

Aus DE 101 08 610 A1 ist es ferner bekannt, den Boden des Behälters mit einem umlaufenden verrundeten Vorsprung zu versehen, welcher auf der zugewandten Stirnfläche des Dichtelements aufliegt und dadurch die Dichtwirkung erhöht. Die Stirnfläche der Dichtung kann jedoch bei einem besonders hohen Befülldruck an Vorsprung abgleiten, so dass eine Deplatzierung des Dichtelements nicht gänzlich ausgeschlossen werden kann. Es stellt sich daher die Aufgabe, ein verbessertes Bremsgerät anzubieten, bei dem die drucksichere Schnittstelle zwischen dem Anschlussstutzen und der Aufnahmebohrung einfacher und kostengünstiger gelöst ist.

Die Aufgabe wird erfindungsgemäß durch ein Bremsgerät mit der Merkmalskombination nach dem Anspruch 1 gelöst. Unteransprüche geben Weiterbildungen und weitere vorteilhafte Ausführungen an. Der Formschluss wirkt dabei in radiale Richtung und entsteht zwangsweise erst durch die Montage des Behälters bzw. des Anschlussstutzens in der Aufnahmebohrung.

Ein derartiger Formschluss verhindert effektiv das Abgleiten und Kriechen des Dichtelements in radiale Richtung und wirkt dadurch sowohl einer Verdrängung des Dichtelements aus dem Spalt zwischen dem Anschlussstutzens und der Aufnahmebohrung entgegen.

Die Erfindung sieht einen Vorsprung vor, der bei der Montage des Behälters zwangsweise axial in das Dichtelement eindringt, so dass der Werkstoff des Dichtelements seitlich verdrängt ist und infolge der Verdrängung ein Formschluss gebildet ist.

Für einen derartigen Formschluss ist keine besondere Formgebung am Dichtelement erforderlich, welche bereits konstruktiv einen Hinterschnitt aufweisen müsste. Es können kostengünstige kragenlose Dichtelemente ohne Funktionsnachteile eingesetzt werden. Die Bauhöhe für die Schnittstelle und als Folge der Materialeinsatz, Gewicht und Kosten können reduziert werden. In einer besonders vorteilhaften Weiterbildung können symmetrische Gestaltungen oder gar einfache Hohlzylinder als Dichtelemente verwendet werden, die beidseitig montiert werden können und keine lagerichtige Ausrichtung bei der Montage erfordern.

Ein Entfall des Hinterschnitts an der Wand der Anschlussbohrung führt zur weiteren Kosteneinsparungen durch einfachere Herstellwerkzeuge und -prozesse sowie die reduzierte Taktzeit.

Die Montage des Dichtelements auch von Hand wird erheblich vereinfacht, das Dichtelement oder der Anschlussstutzen müssen nicht eingerastet werden. Die Demontage erfolgt zerstörungsfrei.

Durch die zusätzliche axiale Verpressung und seitliche Verdrängung des Werkstoffs des Dichtelements am Formschluss, erhöht sich auch die Flächenpressung in radiale Richtung, was eine zusätzliche Verbesserung der Dichtwirkung bewirkt. Zudem wird besonders einfach eine spielfreie axiale Fixierung des Dichtelements ermöglicht

Der Formschluss kann dabei sowohl einseitig im Bereich des Behälterbodens oder des Bohrungsgrunds der Anschlussbohrung, als auch beidseitig vorgesehen sein und so seine Effektivität verdoppeln.

In der vorteilhaften Weiterbildung der Erfindung ist die Spitze des Querschnittprofils des Vorsprungs schmaler als seine Basis vorgesehen, so dass das Querschnittprofil des Vorsprungs keilförmig, insbesondere trapez- oder dreiecksförmig gestaltet ist. Hierdurch wird die seitliche Verdrängung des Werkstoffs des Dichtelements begünstigt, wodurch eine geringere Anpresskraft benötigt und die Gefahr einer Beschädigung des Dichtelements verringert wird.

In einer erfindungsgemäßen Ausführungsform kann der Vorsprung als ein konzentrisch zur Längsachse des Stutzens umlaufendes axial vorgestrecktes Profil ausgebildet sein, wodurch dieser besonders kostengünstig und mit einfacheren Werkzeigen hergestellt werden kann.

In einer anderen erfindungsgemäßen Ausführungsform können mehrere einzelne Vorsprünge entlang einer Kreisbahn konzentrisch zur Längsachse des Stutzens verteilt sein, womit die erforderliche Anpresskraft noch weiter reduziert und eine Rotation des Dichtelements um den Anschlussstutzen verhindert werden.

In verschiedenen erfindungsgemäßen Ausführungsformen kann der Vorsprung sowohl integriert am Behälter oder in der Aufnahmebohrung ausgebildet sein oder an einem separaten Einlegeteil, welches bei der Montage zwischen dem Dichtelement und dem Behälter oder der Aufnahmebohrung eingelegt wird.

Dadurch können beispielsweise bereits bestehende Bremsanlagen kostengünstig nachgerüstet oder unterschiedliche Variantenkonstruktionen kostengünstig angeboten werden.

Im Folgenden soll die Erfindung anhand von Figuren näher erläutert werden. Dazu zeigen:
Fig.1 einen Querschnitt durch einen Anschlussstutzen und eine Aufnahmebohrung einer ersten erfindungsgemäßen Ausführungsform des Bremsgerätes.
Fig.2 und 3 Querschnittdarstellungen anderer erfindungsgemäßer Ausführungsformen
Fig.4 - 7 unterschiedliche erfindungsgemäße Ausführungsformen von Einlegeteilen mit verschiedenen Vorsprüngen.

### Fig.1

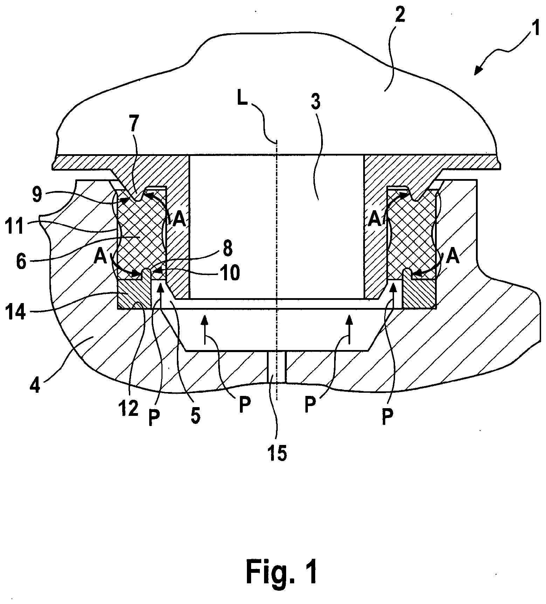

Fig. 1 zeigt in Schnittdarstellung ein erstes erfindungsgemäßes Ausführungsbeispiel. Der Behälter 2 weist einen Anschlussstutzen 3 auf, welcher in die Aufnahmebohrung 5 in einem Hauptbremszylinder 4 eingesetzt ist. In bestimmten, hier nicht gezeigten Applikationen, kann die Aufnahmebohrung 5 nicht nur direkt in einem Hauptbremszylinder 4 angeordnet sein, sondern auch räumlich von diesem beabstandet, beispielsweise in einer Verlängerungsleitung. Bei derartigen Ausführungen können die nachfolgend beschriebenen Ausführungsbeispiele innerhalb der Erfindung für beide Schnittstellen gelten - sowohl zwischen dem Behälter und der Verlängerung, als auch zwischen der Verlängerung und dem Hauptbremszylinder 4

Der Behälter wird mit einer Arbeitsflüssigkeit befüllt, die über einen in die Aufnahmebohrung 5 mündenden Kanal 15 in den Hauptbremszylinder 4 gelangt. Zur Abdichtung der Schnittstelle dient ein Dichtelement 6, welches den Anschlussstutzen 3 radial umgreift und zwischen diesem und der Seitenwand 11 der Aufnahmebohrung 5 eingeklemmt ist. Im gezeigten Ausführungsbeispiel ist das Dichtelement 6 axial symmetrisch, im Wesentlichen ringförmig bzw. als ein Hohlzylinder ausgebildet.

Im Normalbetrieb steht die Arbeitsflüssigkeit im Behälter 2 unter dem Atmosphärendruck. Bei einer schnellen automatisierten Erstbefüllung der Bremsanlage im Werk kann jedoch im Bremssystem zur Bildung von Überdruck > 6 Bar kommen. Durch den Überdruck wird das Dichtelement 6 mit einer Druckkraft P belastet. Die Druckkraft P verursacht im Dichtelement 6 unterschiedliche Biegemomente A, die zu einer Verformung oder gar zum Auspressen des Dichtelements 6 aus seinem vorgesehenen Sitz führen können - sogenanntem "Ausknöpfen". Als Folge treten Leckagen auf.

Um dies zu verhindern ist am Behälter 2 ein umlaufender Vorsprung 7 ausgebildet, der konzentrisch zum Anschlussstutzen 3 angeordnet ist und sich in Richtung Hauptbremszylinder 4 achsparallel zur Längsachse L des Anschlussstutzens 3 erstreckt.

Bei der Montage des Behälters 2 wird zunächst das Dichtelement 6 in der Aufnahmebohrung 5 platziert. Beim anschließenden Einsetzten des Anschlussstutzens 3 dringt der Vorsprung 7 in die obere axiale Stirnfläche des elastischen Dichtelements 6 ein und verdrängt seinen Werkstoff seitlich. Dadurch entsteht zwangsweise ein Formschluss 9, der in radiale Richtung entgegen dem Biegemoment A wirkt und so ein Abgleiten vom Dichtelement 6 am Behälter 2 verhindert - der Vorsprung 7 hackt sich im Dichtelement 6 ein.

An einer nach innen ragenden Stufe 12 der Aufnahmebohrung 5 ist ein Einlegeteil 14 platziert, der einen weiteren konzentrischen umlaufenden Vorsprung 8 aufweist. Der Vorsprung 8 erstreckt sich in Richtung Behälter 2, dringt durch die untere axiale Stirnfläche in das Dichtelement 6 und wirkt im Übrigen analog zum vorstehend beschriebenen Vorsprung 7.

Das seitliche Verdrängen des Werkstoffes des Dichtelementes 6 durch die Vorsprünge 7 und 8 bewirkt zusätzlich zum Einhak-Effekt der Formschlüsse 9 und 10 auch eine lokale Querschnittsverbreitung des Dichtelements 6 und somit eine erhöhte Flächenpressung und einen besseren Dichteffekt.

### Fig.2

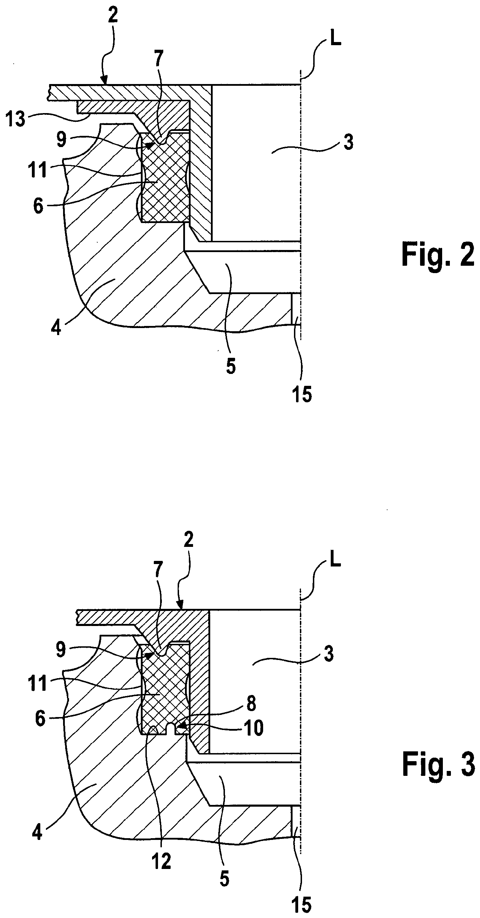

Fig. 2 zeigt in Schnittdarstellung eine weitere erfindungsgemäße Ausführungsform. Im Unterschied zu der Ausführung nach Fig.1 ist der Vorsprung 7 nicht direkt am Behälter 2, sondern an einem separaten Einlegeteil 13 ausgebildet. Das Einlegeteil 13 ist dabei über den Anschlussstutzen 3 geschoben und ist zwischen dem Behälter 2 und dem Dichtelement 6 axial eingeklemmt. Die Wirkungsweise des Vorsprungs 7 verbleibt wie bereits vorstehend beschrieben.

### Fig.3

In einer weiteren erfindungsgemäßen Ausführung ist der Vorsprung 7 wie in Fig.1 direkt am Behälter 2 ausgebildet, der aufnahmebohrungsseitige Vorsprung 8 jedoch nicht an einem Einlegeteil 14, sondern unmittelbar an der Stufe 12 der Aufnahmebohrung 5.

### Fig.4

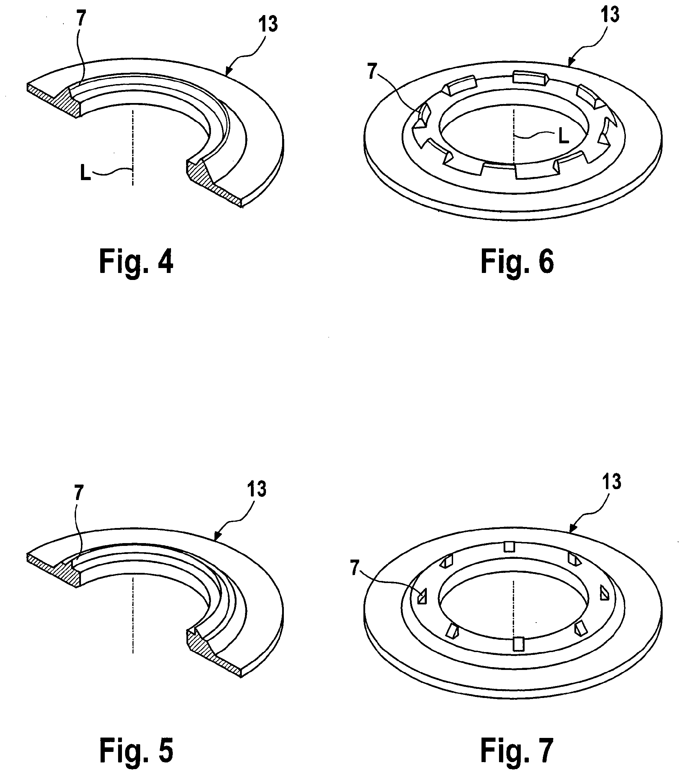

In den Fig. 4 bis 7 zeigen Einlegeteile 13, welche mit unterschiedlichen Ausbildungen von Vorsprüngen 7 ausgestattet sind. Sämtliche Ausführungsformen erfindungsgemäßer Vorsprünge können innerhalb der Erfindung auch integriert am Behälter 2 oder in der Aufnahmebohrung 5 ausgebildet sein.

So ist der Vorsprung 7 in der Ausführung nach Fig.4 durch ein axial vorgestrecktes, konzentrisch zur Längsachse L umlaufendes trapezförmiges Profil gebildet. Weil die Spitze des Profils wesentlich schmaler als seine Basis ist, verursacht der Vorsprung durch seine Keilform weniger Widerstand beim Eindringen in das Dichtelement 6

Die Ausführung nach Fig.5 stellt eine Variante der Ausführung nach Fig.4, jedoch mit einem dreieckigen statt trapezförmigen Profil.

Fig.6 und 7 zeigen weitere erfindungsgemäße Ausführungen, bei denen mehrere einzelne Vorsprünge 7 zueinander beabstandet entlang einer Kreisbahn angeordnet sind, die konzentrisch zu der Längsachse L verläuft. Die Unterbrechungen zwischen den einzelnen Vorsprüngen 7 verringern noch mehr den Widerstand beim Eindringen in das Dichtelement 6, verhindern zudem eine mögliche Rotation des Dichtelements 6 um die Längsachse L. Derartig gestalteten Vorsprünge können innerhalb der Erfindung auch stiftförmig ausgebildet sein.

### Bezugszeichen:

- 1: Bremsgerät
- 2: Behälter
- 3: Anschlussstutzen
- 4: Hauptbremszylinder
- 5: Aufnahmebohrung
- 6: Dichtelement
- 7: Vorsprung
- 8: Vorsprung
- 9: Formschluss
- 10: Formschluss
- 11: Seitenwand
- 12: Stufe
- 13: Einlegeteil
- 14: Einlegeteil
- 15: Kanal
- A: Biegemoment
- L: Längsachse
- P: Druckkraft

## Patentansprüche

1. Bremsgerät (1) für eine hydraulische Kraftfahrzeugbremsanlage, aufweisend einen Behälter (2) zur Aufnahme von Arbeitsflüssigkeit mit wenigstens einem Anschlussstutzen (3), welcher zwecks Austausch der Arbeitsflüssigkeit mit einem Hauptbremszylinder (4) in einer Aufnahmebohrung (5) angeordnet ist, wobei ein Dichtelement (6) den Anschlussstutzen (3) zumindest bereichsweise radial umschließt und zwischen dem Anschlussstutzen (3) und einer Seitenwand (11) der Aufnahmebohrung (5) eingeklemmt ist, **dadurch gekennzeichnet, dass** ein Vorsprung (7,8) vorgesehen ist, der bei Montage des Anschlussstutzens (3) in der Aufnahmebohrung (5) axial in das Dichtelement (6) eindringt, so dass der Werkstoff des Dichtelements (6) seitlich verdrängt wird und infolge der Verdrängung ein Formschluss (9 10) quer zur Richtung der Längsachse (L) des Anschlussstutzens (3) gebildet ist.

2. Bremsgerät (1) nach Anspruch 1 **dadurch gekennzeichnet, dass** ein Querschnittprofil des Vorsprungs (7,8) an seiner Basis breiter als an seiner Spitze und im Wesentlichen keilförmig, insbesondere trapez- oder dreiecksförmig ausgebildet ist.

3. Bremsgerät (1) nach Anspruch 2 **dadurch gekennzeichnet, dass** der Vorsprung (7,8) als ein konzentrisch zur Längsachse (L) des Anschlussstutzens (3) axial vorgestrecktes umlaufendes Profil ausgebildet ist.

4. Bremsgerät (1) nach Anspruch 2 **dadurch gekennzeichnet, dass** mehrere einzelne Vorsprünge (7,8) entlang einer Kreisbahn konzentrisch zur Längsachse (L) des Anschlussstutzens (3) verteilt sind.

5. Bremsgerät (1) nach Anspruch 2 **dadurch gekennzeichnet, dass** der Vorsprung (7,8) am Behälterboden ausgebildet ist.

6. Bremsgerät (1) nach Anspruch 2 **dadurch gekennzeichnet, dass** der Vorsprung (7,8) an einem Einlegeteil (13) ausgebildet ist, welches zwischen dem Behälter (2) und dem Dichtelement (6) angeordnet ist.

7. Bremsgerät (1) nach Anspruch 2 **dadurch gekennzeichnet, dass** der Vorsprung (7,8) an einer Stufe (12) in einer Seitenwand (11) oder an dem Boden der Aufnahmebohrung (5) angeordnet ist und sich in Richtung Behälter (2) erstreckt.

8. Bremsgerät (1) nach Anspruch 2 **dadurch gekennzeichnet, dass** der Vorsprung (7,8) an einem Einlegeteil (14) ausgebildet ist, welches in der Aufnahmebohrung (5) zwischen dem Hauptbremszylinder (4) und dem Dichtelement (6) eingelegt ist.

9. Bremsgerät (1) nach Anspruch 1 **dadurch gekennzeichnet, dass** das Dichtelement (6) vollständig innerhalb der Aufnahmebohrung (5) angeordnet ist.

10. Bremsgerät (1) nach Anspruch 9 **dadurch gekennzeichnet, dass** das Dichtelement (6) axial symmetrisch ausgebildet ist.

## Claims

1. Brake unit (1) for a hydraulic vehicle brake system, having a container (2) which serves for accommodating working fluid and which has at least one connector piece (3) which is arranged in a receiving bore (5) for the purposes of exchanging the working fluid with a master brake cylinder (4), wherein a sealing element (6) radially surrounds the connector piece (3) at least in regions and is clamped between the connector piece (3) and a side wall (11) of the receiving bore (5), **characterized in that** a projection (7, 8) is provided which, during the installation of the connector piece (3) in the receiving bore (5), penetrates axially into the sealing element (6) such that the material of the sealing element (6) is laterally displaced and a form fit (9, 10) transversely with respect to the direction of the longitudinal axis (L) of the connector piece (3) is formed as a result of the displacement.

2. Brake unit (1) according to Claim 1, **characterized in that** a cross-sectional profile of the projection (7, 8) is formed so as to be wider at its base than at its tip so as to be substantially wedge-shaped, in particular trapezoidal or triangular.

3. Brake unit (1) according to Claim 2, **characterized in that** the projection (7, 8) is formed as an axially protruding, encircling profile concentric with respect to the longitudinal axis (L) of the connector piece (3) .

4. Brake unit (1) according to Claim 2, **characterized in that** multiple individual projections (7, 8) are distributed along a circular path concentric with respect to the longitudinal axis (L) of the connector piece (3).

5. Brake unit (1) according to Claim 2, **characterized in that** the projection (7, 8) is formed on the container base.

6. Brake unit (1) according to Claim 2, **characterized in that** the projection (7, 8) is formed on an insert part (13) which is arranged between the container (2) and the sealing element (6).

7. Brake unit (1) according to Claim 2, **characterized in that** the projection (7, 8) is arranged on a step (12) in a side wall (11) or on the base of the receiving bore (5) and extends in the direction of the container (2).

8. Brake unit (1) according to Claim 2, **characterized in that** the projection (7, 8) is formed on an insert part (14) which is placed in the receiving bore (5) between the master brake cylinder (4) and the sealing element (6).

9. Brake unit (1) according to Claim 1, **characterized in that** the sealing element (6) is arranged entirely within the receiving bore (5).

10. Brake unit (1) according to Claim 9, **characterized in that** the sealing element (6) is of axially symmetrical form.

## Revendications

1. Dispositif de freinage (1) pour un système de freinage hydraulique de véhicule automobile, comprenant un contenant (2) destiné à recevoir un liquide de travail et doté d'au moins une tubulure de raccordement (3), laquelle est disposée dans un alésage de réception (5) en vue de l'échange du liquide de travail avec un maître-cylindre de frein (4), un élément d'étanchéité (6) entourant radialement, au moins par endroits, la tubulure de raccordement (3) et étant serré entre la tubulure de raccordement (3) et une paroi latérale (11) de l'alésage de réception (5), **caractérisé en ce qu'**une saillie (7, 8) est prévue, laquelle pénètre axialement dans l'élément d'étanchéité (6) lors du montage de la tubulure de raccordement (3) dans l'alésage de réception (5), de telle sorte que la matière de l'élément d'étanchéité (6) soit refoulée latéralement et que, suite au refoulement, un engagement par complémentarité de forme (9, 10) transversalement à la direction longitudinale (L) de la tubulure de raccordement (3) soit réalisé.

2. Dispositif de freinage (1) selon la revendication 1, **caractérisé en ce qu'**un profil en section transversale de la saillie (7, 8) est plus large au niveau de sa base qu'au niveau de son extrémité et est réalisé sensiblement sous forme cunéiforme, en particulier sous forme trapézoïdale ou triangulaire.

3. Dispositif de freinage (1) selon la revendication 2, **caractérisé en ce que** la saillie (7, 8) est réalisée sous la forme d'un profilé périphérique préétiré axialement de manière concentrique à l'axe longitudinal (L) de la tubulure de raccordement (3).

4. Dispositif de freinage (1) selon la revendication 2, **caractérisé en ce que** plusieurs saillies individuelles (7, 8) sont réparties le long d'une trajectoire circulaire de manière concentrique à l'axe longitudinal (L) de la tubulure de raccordement (3).

5. Dispositif de freinage (1) selon la revendication 2, **caractérisé en ce que** la saillie (7, 8) est réalisée sur le fond de contenant.

6. Dispositif de freinage (1) selon la revendication 2, **caractérisé en ce que** la saillie (7, 8) est réalisée sur un insert (13), lequel est disposé entre le contenant (2) et l'élément d'étanchéité (6) .

7. Dispositif de freinage (1) selon la revendication 2, **caractérisé en ce que** la saillie (7, 8) est disposée sur un gradin (12) dans une paroi latérale (11) ou sur le fond de l'alésage de réception (5) et s'étend en direction du contenant (2).

8. Dispositif de freinage (1) selon la revendication 2, **caractérisé en ce que** la saillie (7, 8) est réalisée sur un insert (14), lequel est inséré dans l'alésage de réception (5) entre le maître-cylindre de frein (4) et l'élément d'étanchéité (6).

9. Dispositif de freinage (1) selon la revendication 1, **caractérisé en ce que** l'élément d'étanchéité (6) est disposé complètement à l'intérieur de l'alésage de réception (5).

10. Dispositif de freinage (1) selon la revendication 9, **caractérisé en ce que** l'élément d'étanchéité (6) est réalisé de manière axialement symétrique.
